(19) Europäisches Patentamt
European Patent Office
Office européen des brevets

(11) **EP 3 377 910 B1**

(12) **FASCICULE DE BREVET EUROPEEN**

(45) Date de publication et mention
de la délivrance du brevet:
**20.10.2021 Bulletin 2021/42**

(51) Int Cl.:
***G01P 15/125*** *(2006.01)*       ***G01P 15/13*** *(2006.01)*
***G01P 15/08*** *(2006.01)*

(21) Numéro de dépôt: **16795392.6**

(22) Date de dépôt: **16.11.2016**

(86) Numéro de dépôt international:
**PCT/EP2016/077898**

(87) Numéro de publication internationale:
**WO 2017/085142 (26.05.2017 Gazette 2017/21)**

(54) **CAPTEUR ACCELEROMETRIQUE PENDULAIRE DE TYPE MEMS A DEUX PLAGES DE MESURE**

*MEMS-PENDEL-BESCHLEUNIGUNGSMESSER MIT ZWEI MESSBEREICHEN*

MEMS PENDULUM ACCELEROMETER HAVING TWO MEASUREMENT RANGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2015 FR 1502386**

(43) Date de publication de la demande:
**26.09.2018 Bulletin 2018/39**

(73) Titulaire: **Safran Electronics & Defense**
**75015 Paris (FR)**

(72) Inventeurs:
• **RAGOT, Vincent**
  **77550 Moissy-Cramayel (FR)**
• **CARRE, Damien**
  **77550 Moissy-Cramayel (FR)**
• **ULLAH, Philippe**
  **77550 Moissy-Cramayel (FR)**
• **BOUTEILLOUX, Alain**
  **77550 Moissy-Cramayel (FR)**
• **BIGOURIE, Nicolas**
  **77550 Moissy-Cramayel (FR)**

(74) Mandataire: **Lavialle, Bruno François Stéphane et al**
**Cabinet Boettcher**
**16, rue Médéric**
**75017 Paris (FR)**

(56) Documents cités:
**EP-A1- 1 962 063      EP-A1- 2 770 331**
**US-A- 5 473 946**

## Description

### Domaine de l'invention

La présente invention concerne la détection de grandeur physique au moyen d'un capteur inertiel et plus particulièrement un capteur accélérométrique pendulaire, et par exemple un capteur de type microsystème électromécanique (ou MEMS).

### Etat de la technique

Un accéléromètre pendulaire électrostatique comprend un boîtier auquel est reliée une masse sismique reliée au boîtier par une ou plusieurs charnières positionnées de telle manière que la masse sismique forme un pendule mobile par rapport au boîtier soit en translation soit en rotation. Les déplacements de la masse sismique sous l'effet de l'accélération sont généralement détectés au moyen de trois électrodes. Une première électrode fixe et une deuxième électrode fixe sont solidaires du boîtier et reliées à un circuit d'excitation. La troisième électrode, mobile, est portée par le pendule et reliée à un circuit de détection.

Chaque électrode fixe forme avec l'électrode mobile une capacité dont la valeur dépend de leur écartement. En l'absence de défaut de réalisation et lorsque le capteur n'est pas soumis à une accélération suivant son axe sensible, le pendule demeure dans une position neutre dans laquelle les deux capacités sont égales. En revanche, lorsque le pendule est soumis à une accélération suivant son axe sensible, il se déplace, entraînant une diminution de la capacité formée par l'électrode mobile et l'une des électrodes fixes, et une augmentation de la capacité formée par l'électrode mobile et l'autre des électrodes fixes. Cette variation des capacités dépend également des déformations du boîtier et du pendule.

Dans un fonctionnement en boucle fermée, comme par exemple décrit dans EP 2 770 331 A1 et US 5 473 946 A, la position du pendule est asservie dans une position neutre, ou position de consigne, à mi-distance entre les électrodes fixes, en appliquant au pendule une force électrostatique. La force électrostatique doit donc compenser l'accélération appliquée selon l'axe sensible, ce qui permet l'estimation de cette dernière. La force électrostatique est le résultat de tensions appliquées aux électrodes pour maintenir à zéro la différence des capacités.

### Objet de l'invention

Le rapport entre la performance de dérive d'un capteur et l'étendue de sa gamme de mesure est fixé par la précision de réalisation de la structure mécanique et du circuit électronique du capteur.

Pour réaliser un capteur disposant d'une dérive faible avec une gamme de mesure étendue, il est actuellement nécessaire d'utiliser des structures mécaniques et électroniques précises donc coûteuses. L'invention vise à dépasser cette limite.

### Exposé de l'invention

A cet effet, on prévoit, un capteur accélérométrique, comprenant un bâti auquel est fixé un corps massique formant pendule et portant une électrode mobile reliée à une unité de commande reliée à deux électrodes fixes solidaires du bâti pour former avec l'électrode mobile deux condensateurs de capacités variables en fonction d'une distance entre les électrodes. L'unité de commande est agencée pour réaliser des opérations de mesure des capacités et une opération de commande en fonction des capacités mesurées dans laquelle une tension est appliquée aux électrodes pour maintenir le pendule dans une position prédéterminée. Ces opérations sont réalisées par application d'impulsions. Selon l'invention, l'opération de commande comprend sélectivement :

- une phase de commande fine dans laquelle une première tension est appliquée entre l'une des électrodes fixes et l'électrode mobile, l'autre des électrodes fixes étant au même potentiel que l'électrode mobile,
- une phase de commande étendue dans laquelle une deuxième tension est appliquée entre l'une des électrodes fixes et l'électrode mobile, l'autre des électrodes fixes étant au même potentiel que l'électrode mobile et la deuxième tension étant supérieure en valeur absolue à la première tension.

Ainsi :

- la performance de biais optimale est obtenue en envoyant des commandes d'amplitude modérée. Cela correspond au mode de fonctionnement « fin » ;
- dans le mode de fonctionnement « étendu », on s'autorise à envoyer des commandes de forte amplitude permettant d'étendre ainsi la dynamique au détriment de la performance de biais.

Généralement, la pleine échelle du capteur est rarement sollicitée sauf lorsque le porteur du capteur subit une forte accélération ou décélération, par exemple lors d'une mise en mouvement brutal du porteur, à la suite d'un choc ou lors d'un arrêt brutal du porteur. En revanche, la pleine échelle n'est le plus souvent pas utilisée lors des autres phases de déplacement du porteur.

L'invention permet donc de :

- garantir lors de la phase de commande fine une performance optimale sur une gamme de mesure réduite,
- effectuer lors de la phase de commande étendue des mesures sur une gamme étendue avec une performance éventuellement dégradée.

Ainsi, avec l'invention, la performance du capteur reste optimale en moyenne sur la durée de fonctionnement du fait que la phase de commande étendue est habituellement rarement utilisée en utilisation nominale (c'est-à-dire hors opération particulière telle qu'une calibration ou une phase de test).

Selon un mode de réalisation particulier, en phase de commande fine, un potentiel de référence est appliqué à ladite une des électrodes fixes et un deuxième potentiel est appliqué à ladite électrode mobile et à ladite autre des électrodes fixes et, dans la phase de commande étendue, le potentiel de référence est appliqué à ladite une des électrodes fixes et le potentiel de référence est appliqué avec une polarité inversée à ladite électrode mobile et à ladite autre des électrodes fixes.

Ce mode de réalisation permet de limiter le nombre de tensions utilisées, ce qui facilite la conception et la fabrication du capteur.

De préférence alors, le deuxième potentiel est nul.

L'invention a également pour objet un procédé de détection d'accélération au moyen d'un tel capteur.

D'autres caractéristiques et avantages de l'invention ressortiront à la lecture de la description qui suit de modes de réalisation particuliers non limitatifs de l'invention.

**Brève description des figures**

Il sera fait référence aux dessins annexés, parmi lesquels :

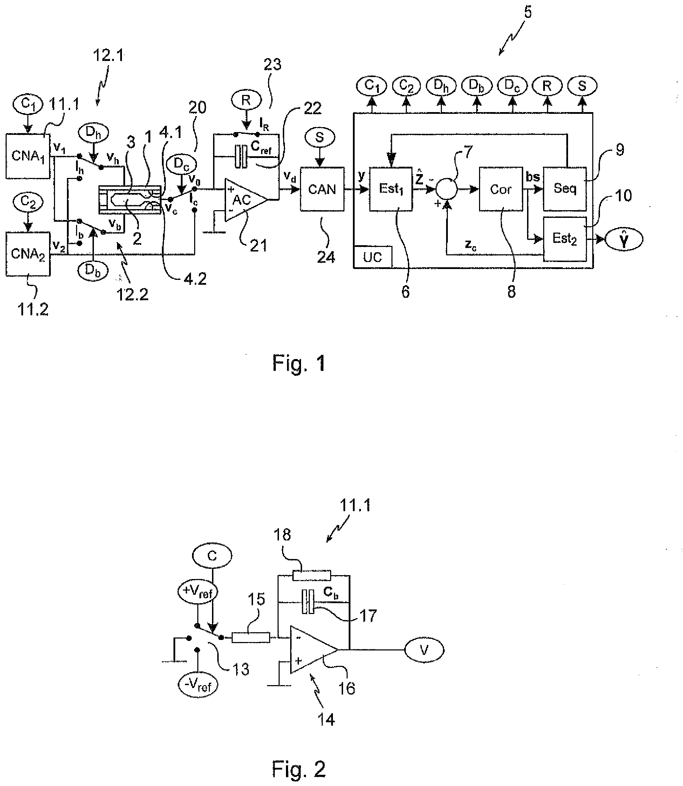

- la figure 1 est une vue schématique d'un capteur selon l'invention,
- la figure 2 est une vue schématique d'un convertisseur numérique analogique utilisé dans le capteur de l'invention,
- la figure 3 est un chronogramme montrant le fonctionnement du capteur en gamme étendue.

**Description détaillée de l'invention**

En référence à la figure, le capteur accélérométrique selon l'invention est ici un microsystème électromécanique, dit aussi MEMS, réalisé par gravure d'une plaque de matériau cristallin ou semi-cristallin, ici du silicium.

Le capteur comprend un bâti 1 auquel est articulé un corps massique 2 formant pendule et portant une électrode 3 mobile par rapport au bâti 1.

Deux électrodes fixes 4.1, 4.2 sont solidaires du bâti 1 pour former avec l'électrode mobile 3 deux condensateurs de capacités variables en fonction d'une distance entre les électrodes 4.1 et 3 d'une part et entre les électrodes 4.2 et 3 d'autre part.

Les électrodes 3, 4.1, 4.2 sont reliées à une unité électronique de commande généralement désignée en 5.

L'unité de commande 5 comprend un circuit électronique de commande, dont la structure est connue, comportant un premier estimateur 6 relié à l'entrée négative d'un soustracteur 7 ayant une sortie reliée à l'entrée d'un correcteur 8. Le correcteur 8 a une première sortie reliée à un séquenceur 9 et une deuxième sortie reliée à un deuxième estimateur 10 ayant une première sortie formant la sortie principale de l'unité de commande 5 et une deuxième sortie reliée à l'entrée positive du soustracteur 7.

L'unité de commande 5 est reliée à des convertisseurs numérique - analogique, généralement désignés en 11.1, 11.2, respectivement reliés aux électrodes fixes 4.1, 4.2 par des commutateurs 12.1, 12.2.

Chaque convertisseur numérique - analogique 11.1, 11.2 comprend un commutateur 13 qui est piloté par l'unité de commande 5 et qui possède une première borne d'entrée à un potentiel de référence +Vref ; une deuxième borne d'entrée à l'inverse du potentiel de référence, soit -Vref ; une troisième borne d'entrée à un potentiel nul ; et une borne de sortie reliée à un circuit d'adaptation d'impédance 14. Le circuit d'adaptation d'impédance 14, connu en lui-même, comprend une résistance d'entrée 15 reliée à l'entrée négative d'un amplificateur opérationnel 16 doublé par un condensateur de bouclage 17 et par une résistance 18. La capacité du condensateur de bouclage 17 détermine les temps de montée et descente, ce qui permet de maîtriser les courants de charge et de décharge des capacités entre les électrodes 4.1 et 3, 4.2 et 3.

Le convertisseur numérique - analogique 11.1 a sa sortie $V_1$ reliée à une première borne du commutateur 12.1 et a une première borne du commutateur 12.2. Le convertisseur numérique - analogique 11.2 a sa sortie $V_2$ reliée à une deuxième borne du commutateur 12.1 et a une deuxième borne du commutateur 12.2. Le commutateur 12.1 a une troisième borne $V_h$ reliée à la première électrode fixe 4.1 et le commutateur 12.2 a une troisième borne $V_b$ reliée à la deuxième électrode fixe 4.2. Les commutateurs 12.1, 12.2 sont pilotés pour relier leur troisième borne soit à leur première borne soit à leur deuxième borne.

L'électrode mobile 3 a sa sortie $V_c$ reliée à une première borne d'un commutateur 20 ayant une deuxième borne reliée à la sortie $V_2$ du convertisseur numérique - analogique 11.2 et une troisième borne $V_0$ reliée à l'entrée inverseuse d'un amplificateur de charge 21 doublé par un condensateur 22 et par un interrupteur 23. L'amplificateur de charge 21 a sa sortie $V_d$ reliée à un convertisseur analogique - numérique 24 relié à l'entrée du premier estimateur 6.

Le séquenceur 9 émet les commandes suivantes :

- $C_1$ pour piloter le commutateur 13 du convertisseur numérique - analogique 11.1,
- $C_2$ pour piloter le commutateur 13 du convertisseur numérique - analogique 11.2,

- $D_h$ pour piloter le commutateur 12.1,
- $D_b$ pour piloter le commutateur 12.2,
- $D_c$ pour piloter le commutateur 20,
- R pour piloter le commutateur 23,
- S pour piloter le convertisseur analogique - numérique 24.

L'unité de commande est agencée pour émettre des signaux logiques $ED_1$, $ED_2$ commandant la mesure des capacités entre les électrodes 3 et 4.1 d'une part et entre les électrodes 3 et 4.2 d'autre part, et un signal logique EC commandant la délivrance d'impulsions en fonction des capacités mesurées pour maintenir le pendule dans une position prédéterminée, à savoir une position médiane entre les électrodes fixes 4.1, 4.2.

L'opération de commande comprend sélectivement une phase de commande fine et une phase de commande étendue. Dans la phase de commande fine, une première tension est appliquée entre l'une des électrodes fixes 4.1, 4.2 et l'électrode mobile 3 et l'autre des électrodes fixes 4.1, 4.2 est au même potentiel que l'électrode mobile 3. Dans la phase de commande étendue, une deuxième tension est appliquée entre l'une des électrodes fixes 4.1, 4.2 et l'électrode mobile 3 et l'autre des électrodes fixes 4.1, 4.2 est au même potentiel que l'électrode mobile 3. La deuxième tension est supérieure en valeur absolue à la première tension.

Plus précisément, dans la phase de commande fine, un potentiel de référence $V_{ref}$ est appliqué à ladite une des électrodes fixes 4.1, 4.2 et un deuxième potentiel, ici nul, est appliqué à ladite électrode mobile 3 et à ladite autre des électrodes fixes 4.1, 4.2.

Plus précisément, dans la phase de commande étendue, le potentiel de référence $V_{ref}$ est appliqué à ladite une des électrodes fixes 4.1, 4.2 et le potentiel de référence est appliqué avec une polarité inversée à ladite électrode mobile 3 et à ladite autre des électrodes fixes 4.1, 4.2.

Les commandes logiques $D_c$, $D_h$, $D_b$ et EC obéissent aux relations booléennes ci-dessous :

$$\begin{aligned} D_c &= \overline{EC} \\ D_h &= ED_1 + EC \cdot \frac{1+bs}{2} \\ D_b &= ED_2 + EC \cdot \frac{1-bs}{2} \\ bs &= \pm 1 \end{aligned}$$

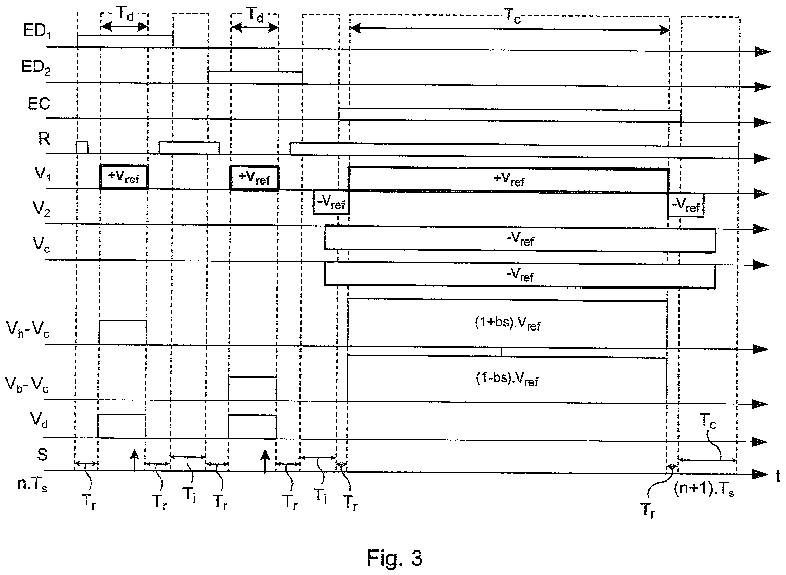

Le chronogramme de la figure 3 montre les différentes opérations qui sont réalisées en gamme étendue pendant la période d'échantillonnage $T_s$ qui comprend deux périodes de détection $T_d$ (correspondant aux signaux $ED_1$ et $ED_2$) et une période de commande $T_c$ (correspondant au signal EC).

On peut voir qu'en gamme étendue, les sorties $V_1$, $V_2$ et $V_c$ peuvent prendre les potentiels $+V_{ref}$ ou $-V_{ref}$ selon la direction de l'effort à exercer sur le pendule. La tension appliquée à la capacité $C_h$ (entre les électrodes 4.1 et 3) vaut $(1 + bs)V_{ref}$ et la tension appliquée à la capacité $C_b$ (entre les électrodes 4.2 et 3) vaut $(1 - bs)V_{ref}$, bs dépendant de la direction de l'effort à exercer sur le pendule.

En revanche, en gamme fine, les sorties $V_1$, $V_2$ et $V_c$ peuvent prendre les potentiels $+V_{ref}$ ou 0 selon la direction de l'effort à exercer sur le pendule. Alors, la tension appliquée à la capacité $C_h$ (entre les électrodes 4.1 et 3) vaut $(1 + bs)V_{ref}/2$ et la tension appliquée à la capacité $C_b$ (entre les électrodes 4.2 et 3) vaut $(1 - bs)V_{ref}/2$, bs dépendant de la direction de l'effort à exercer sur le pendule. L'efficacité de l'impulsion de commande en gamme fine est donc divisée par quatre.

Durant l'opération de détection, $Q_0$ étant la quantité de charge injectée par l'interrupteur 23 lors de son ouverture et $V_{os}$ la tension d'offset en sortie de l'amplificateur de charge 21, les tensions en sortie de l'amplificateur de charge 21 aux instants d'échantillonnage valent :

$$v_{dh} = -\frac{C_h \cdot V_{ref} + Q_o}{C_{ref}} + V_{os}$$

$$v_{db} = -\frac{C_b \cdot V_{ref} + Q_o}{C_{ref}} + V_{os}$$

On en déduit la différence des capacités :

$$C_h - C_b = C_{ref} \cdot \frac{v_{db} - v_{dh}}{V_{ref}}$$

Au premier ordre, la position z est une fonction affine de la différence ci-dessus.

L'unité de commande 5 gère le fonctionnement du dispositif, en particulier la chronologie des diverses opérations échantillonnées à une fréquence $\mathbf{F_s}$ (période $\mathbf{T_s} = 1/F_s$, voir la figure 3). L'unité de commande 5 pilote de manière séquentielle et cyclique les convertisseurs numérique - analogique 11.1, 11.2 et le convertisseur analogique numérique 24 et les interrupteurs analogiques 12.1, 12.2 et 20.

Selon l'état logique de la commande $D_c$, l'électrode mobile 3 est reliée à l'entrée inverseuse de l'amplificateur de charge 21 ou à la sortie $\mathbf{v_2}$ du convertisseur numérique - analogique 11.2.

Selon l'état logique de la commande $D_h$, l'électrode fixe 4.1 est reliée à la sortie $\mathbf{v_1}$ du convertisseur numérique - analogique 11.1 ou à la sortie $\mathbf{v_2}$ du convertisseur numérique - analogique 11.2.

Selon l'état logique de la commande $D_b$, l'électrode fixe 4.2 est reliée à la sortie $\mathbf{v_1}$ du convertisseur numérique - analogique 11.1 ou à la sortie $\mathbf{v_2}$ du convertisseur numérique - analogique 11.2.

Les tensions $v_h$, $v_c$ et $v_b$ appliquées aux électrodes 4.1, 3 et 4.2 sont séquencées de sorte à mesurer $C_h$, mesurer $C_b$ puis appliquer la force électrostatique permettant d'asservir le pendule à sa position de consigne imposée par l'unité de commande 5.

En phase de détection, l'électrode mobile 3 est reliée à l'entrée inverseuse de l'amplificateur de charge 21 bouclé par la capacité $C_{ref}$ du condensateur 22 et l'interrupteur 23 commandé par le signal logique $R$ issu du séquenceur 9. Par contre-réaction, cet amplificateur de charge 21 maintient le potentiel $v_0$ au voisinage de zéro en permanence.

La tension de sortie $v_d$ de l'amplificateur de charge 21 est convertie en une grandeur numérique $y$ par un convertisseur analogique - numérique 24 piloté par le signal logique $S$.

L'estimateur 6 fournit l'estimée $\hat{z}$ du déplacement du pendule à partir de la grandeur $y$.

L'estimateur 10 fournit la consigne $z_c$ qui permet de compenser l'offset dû aux dissymétries statiques des capacités entre les électrodes 4.1 et 3 et entre les électrodes 3 et 4.2.

La différence $z_c$-$\hat{z}$ est asservie à zéro par un correcteur numérique 8 qui élabore une commande **bs** valant +1 ou -1 selon qu'il convient de pousser ou de tirer sur le pendule pour ramener l'entrée du correcteur 8 à zéro.

Si bs = +1, la tension est appliquée à l'électrode 4.1 qui tire alors vers elle le pendule.

Si bs = -1, la tension est appliquée à l'électrode 4.2 qui tire alors vers elle le pendule.

L'estimateur 10 élabore l'estimée $\hat{\gamma}$ de l'accélération à mesurer ainsi que la consigne $z_c$.

Le séquenceur 9 séquence les opérations à l'intérieur de la période d'échantillonnage et d'une période d'échantillonnage à l'autre.

Enfin, l'unité de commande 5 sélectionne de manière autonome la gamme de fonctionnement, soit étendue soit fine, en fonction de la valeur de $\hat{\gamma}$ qui est comparée à un seuil.

Les différences de temps de réponse des interrupteurs analogiques 12.1, 12.2 et 20 sont la principale source de dissymétrie des impulsions. Pour y remédier, les opérations de détection (mesures des capacités $C_h$ et $C_b$, repérées $T_d$ sur la figure 3) et de commande (repérée $T_c$ sur la figure 3) sont séparées par des phases dites de relaxation (repérées $T_r$ sur la figure 3) durant lesquelles chacun des interrupteurs 12.1, 12.2 et 20 est pré-positionné alors que les trois tensions appliquées à ses bornes sont identiques. Or, durant certaines phases, il est indispensable de faire évoluer simultanément les tensions appliquées aux trois électrodes. Pour ce faire, celles-ci sont préalablement reliées au convertisseur numérique analogique 11.2 avant de faire évoluer la sortie de ce dernier. Ces phases sont repérées $T_i$ sur le chronogramme de la figure 3.

Bien entendu, l'invention n'est pas limitée aux modes de réalisation décrits mais englobe toute variante entrant dans le champ de l'invention telle que définie par les revendications.

En particulier, la chronologie des opérations ci-dessous peut être différente de celle décrite. Par exemple, le nombre de commutations réalisées en gamme fine peut être réduit ou la durée, l'amplitude et le signe des impulsions peuvent être modifiés. En outre, les phases de détection peuvent être permutées d'une période sur l'autre pour améliorer la symétrie de fonctionnement.

La tension en gamme étendue peut être ou pas un multiple entier de la tension en gamme fine.

Le potentiel inférieur en gamme fine peut être différent de zéro.

Le seuil auquel l'estimée de l'accélération est comparée peut être fixé une fois pour toute en usine ou modifié en fonction de conditions d'utilisation du capteur ou de performances souhaitées de celui-ci.

## Revendications

1. Capteur accélérométrique, comprenant un bâti (1) auquel est fixé un corps massique (2) formant pendule et portant une électrode mobile (3) reliée à une unité de commande (5) reliée à deux électrodes fixes (4.1, 4.2) solidaires du bâti pour former avec l'électrode mobile deux condensateurs de capacités variables en fonction d'une distance entre les électrodes, l'unité de commande étant agencée pour réaliser des opérations de mesure des capacités et une opération de commande en fonction des capacités mesurées dans laquelle une tension est appliquée aux électrodes pour maintenir le pendule dans une position prédéterminée, ces opérations étant réalisées par application d'impulsions, le capteur étant **caractérisé en ce que** l'opération de commande comprend sélectivement :

   - une phase de commande dite fine dans laquelle une première tension est appliquée entre l'une des électrodes fixes et l'électrode mobile, l'autre des électrodes fixes étant au même potentiel que l'électrode mobile,
   - une phase de commande dite étendue dans laquelle une deuxième tension est appliquée entre l'une des électrodes fixes et l'électrode mobile, l'autre des électrodes fixes étant au même potentiel que l'électrode mobile et la deuxième tension étant supérieure en valeur absolue à la première tension,

   et **en ce que** la phase de commande est sélectionnée en fonction d'une estimée de l'accélération obtenue à partir des capacités mesurées

2. Capteur selon la revendication 1, dans lequel, dans la phase de commande fine, un potentiel de référence est appliqué à ladite une des électrodes fixes et un deuxième potentiel est appliqué à ladite électrode mobile et à ladite autre des électrodes fixes et, dans la phase de commande étendue, le potentiel de référence est appliqué à ladite une des électrodes fixes et le potentiel de référence est appliqué avec une polarité inversée à ladite électrode mobile et à ladite autre des électrodes fixes.

**3.** Capteur selon la revendication 2, dans lequel le deuxième potentiel est nul.

**4.** Capteur selon l'une quelconque des revendications précédentes, dans lequel l'unité de commande comprend deux convertisseurs numérique - analogique reliés respectivement à une des électrodes fixes.

**5.** Capteur selon la revendication 4, dans lequel chaque convertisseur numérique - analogique comprend un commutateur qui est piloté par l'unité de commande et qui possède une première borne d'entrée à un potentiel de référence, une deuxième borne d'entrée à l'inverse du potentiel de référence, une troisième borne d'entrée à un potentiel nul et une borne de sortie.

**6.** Capteur selon la revendication 5, dans lequel la borne de sortie est reliée à un circuit d'adaptation d'impédance.

**7.** Capteur selon la revendication 1, dans lequel l'électrode mobile (3) est reliée à une entrée d'un convertisseur analogique - numérique (24) ayant une sortie reliée à une entrée d'un premier estimateur (6) relié à l'entrée négative d'un soustracteur (7) ayant une sortie reliée à l'entrée d'un correcteur (8) ayant une première sortie reliée à un séquenceur (9) et une deuxième sortie reliée à un deuxième estimateur (10) ayant une première sortie formant la sortie principale de l'unité de commande (5) et une deuxième sortie reliée à l'entrée positive du soustracteur (7) ; le premier estimateur étant agencé pour fournir une première estimée d'un déplacement du pendule à partir d'une différence entre les capacités, le deuxième estimateur étant agencé pour fournir une deuxième estimée de ce déplacement et une consigne de commande pour compenser un offset dû à une dissymétrie statique des capacités, le correcteur étant agencé pour asservir à zéro la différence entre la consigne et la première estimée, le séquenceur étant agencé pour piloter le capteur.

**8.** Capteur selon la revendication 7, dans lequel l'électrode mobile (3) est reliée à une première borne d'un commutateur (20) ayant une deuxième borne reliée à la sortie d'un convertisseur numérique - analogique (11.2) relié à l'une des électrodes fixes (4.2) et une troisième borne reliée à l'entrée inverseuse d'un amplificateur de charge (21) doublé par un condensateur (22) et par un interrupteur (23), l'amplificateur de charge ayant sa sortie reliée au convertisseur analogique

- numérique (24) relié à l'entrée du premier estimateur (6) .

**9.** Procédé de détection d'accélération au moyen d'un capteur accélérométrique comprenant un bâti (1) auquel est fixé un corps massique (2) formant pendule et portant une électrode mobile (3) reliée à une unité de commande (5) reliée à deux électrodes fixes (4.1, 4.2) solidaires du bâti pour former avec l'électrode mobile deux condensateurs de capacités variables en fonction d'une distance entre les électrodes, le procédé comprenant des opérations de mesure des capacités et de commande en fonction des capacités mesurées dans laquelle une tension est appliquée aux électrodes pour maintenir le pendule dans une position prédéterminée, ces opérations étant réalisées par application d'impulsions, le procédé étant **caractérisé en ce que** l'opération de commande comprend sélectivement :

    - une phase de commande dite fine dans laquelle une première tension est appliquée entre l'une des électrodes fixes et l'électrode mobile, l'autre des électrodes fixes étant au même potentiel que l'électrode mobile,
    - une phase de commande dite étendue dans laquelle une deuxième tension est appliquée entre l'une des électrodes fixes et l'électrode mobile, l'autre des électrodes fixes étant au même potentiel que l'électrode mobile et la deuxième tension étant supérieure en valeur absolue à la première tension,

et **en ce que** la phase de commande est sélectionnée en fonction d'une estimée de l'accélération obtenue à partir des capacités mesurées.

**Patentansprüche**

**1.** Beschleunigungssensor, umfassend ein Gestell (1), am dem ein Massenkörper (2) befestigt ist, der ein Pendel bildet und eine bewegliche Elektrode (3) trägt, die mit einer Steuereinheit (5) verbunden ist, die mit zwei ortsfesten Elektroden (4.1, 4.2) verbunden ist, die fest mit dem Gestell verbunden sind, um mit der beweglichen Elektrode zwei Kondensatoren mit Kapazitäten zu bilden, die in Abhängigkeit einer Distanz zwischen den Elektroden veränderlich sind, wobei die Steuereinheit ausgebildet ist, um Messvorgänge zum Messen der Kapazitäten und einen Steuervorgang in Abhängigkeit der gemessenen Kapazitäten zu realisieren, bei dem eine Spannung an den Elektroden angelegt wird, um das Pendel in einer vorbestimmten Position zu halten, wobei diese Vorgänge durch Anlegen von Impulsen umgesetzt werden, wobei der Sensor **dadurch gekennzeichnet ist, dass** der Steuervorgang selektiv umfasst:

- eine sogenannte feine Steuerphase, in der eine erste Spannung zwischen einer der ortsfesten Elektroden und der beweglichen Elektrode angelegt wird, wobei die andere der ortsfesten Elektroden das gleiche Potential wie die bewegliche Elektrode hat,

- eine sogenannte erweiterte Steuerphase, in der eine zweite Spannung zwischen einer der ortsfesten Elektroden und der beweglichen Elektrode angelegt wird, wobei die andere der ortsfesten Elektroden das gleiche Potential wie die bewegliche Elektrode hat und wobei die zweite Spannung im Absolutwert größer als die erste Spannung ist,

und dass die Steuerphase in Abhängigkeit von einem Schätzwert der Beschleunigung ausgewählt wird, der anhand der gemessenen Kapazitäten ermittelt wird.

2. Sensor nach Anspruch 1, bei dem in der feinen Steuerphase ein Referenzpotential an der genannten einen der ortsfesten Elektroden angelegt wird und ein zweites Potential an der genannten beweglichen Elektrode und an der genannten anderen der ortsfesten Elektroden angelegt wird und in der erweiterten Steuerphase das Referenzpotential an der genannten einen der ortsfesten Elektroden angelegt wird und das Referenzpotential mit einer umgekehrten Polarität an der genannten beweglichen Elektrode und an der genannten anderen der ortsfesten Elektroden angelegt wird.

3. Sensor nach Anspruch 2, bei dem das zweite Potential null ist.

4. Sensor nach einem der vorhergehenden Ansprüche, bei dem die Steuereinheit zwei Digital-Analog-Wandler umfasst, die jeweils mit einer der ortsfesten Elektroden verbunden sind.

5. Sensor nach Anspruch 4, bei dem jeder Digital-Analog-Wandler einen Schalter umfasst, der von der Steuereinheit gesteuert wird und der eine erste Eingangsklemme mit einem Referenzpotential hat, eine zweite Eingangsklemme mit einem Potential, das die Umkehrung des Referenzpotentials ist, eine dritte Eingangsklemme mit einem Null-Potential und eine Ausgangsklemme.

6. Sensor nach Anspruch 5, bei dem die Ausgangsklemme mit einer Impedanzanpassungsschaltung verbunden ist.

7. Sensor nach Anspruch 1, bei dem die bewegliche Elektrode (3) mit einem Eingang eines Analog-Digital-Wandlers (24) verbunden ist, der einen Ausgang hat, der mit einem Eingang eines ersten Schätzers (6) verbunden ist, der mit dem negativen Eingang eines Subtrahierers (7) verbunden ist, der einen Ausgang hat, der mit dem Eingang eines Korrektors (8) verbunden ist, der einen ersten Ausgang hat, der mit einem Sequenzer (9) verbunden ist, sowie einen zweiten Ausgang, der mit einem zweiten Schätzer (10) verbunden ist, der einen ersten Ausgang hat, der den Hauptausgang der Steuereinheit (5) bildet, sowie einen zweiten Ausgang, der mit dem positiven Eingang des Subtrahierers (7) verbunden ist; wobei der erste Schätzer ausgebildet ist, um einen ersten Schätzwert einer Bewegung des Pendels anhand einer Differenz zwischen den Kapazitäten zu liefern, wobei der zweite Schätzer ausgebildet ist, um einen zweiten Schätzwert dieser Bewegung und einen Steuersollwert zu liefern, um einen Offset aufgrund einer statischen Asymmetrie der Kapazitäten auszugleichen, wobei der Korrektor ausgebildet ist, um die Differenz zwischen dem Sollwert und dem ersten Schätzwert auf null zu regeln, wobei der Sequenzer ausgebildet ist, um den Sensor zu steuern.

8. Sensor nach Anspruch 7, bei dem die bewegliche Elektrode (3) mit einer ersten Klemme eines Schalters (20) verbunden ist, der eine zweite Klemme hat, die mit dem Ausgang eines Digital-Analog-Wandlers (11.2) verbunden ist, der mit einer der ortsfesten Elektroden (4.2) verbunden ist, und eine dritte Klemme, die mit dem umgekehrten Eingang eines Lastverstärkers (21) verbunden ist, der durch einen Kondensator (22) und einen Unterbrecher (23) gedoppelt ist, wobei der Ausgang des Lastverstärkers mit einem Analog-Digital-Wandler (24) verbunden ist, der mit dem Eingang des ersten Schätzers (6) verbunden ist.

9. Verfahren zum Erfassen einer Beschleunigung mittels eines Beschleunigungssensors, der ein Gestell umfasst, an dem ein Massenkörper (2) befestigt ist, der ein Pendel bildet und eine bewegliche Elektrode (3) trägt, die mit einer Steuereinheit (5) verbunden ist, die mit zwei ortsfesten Elektroden (4.1, 4.2) verbunden ist, die fest mit dem Gestell verbunden sind, um mit der beweglichen Elektrode zwei Kondensatoren mit Kapazitäten zu bilden, die in Abhängigkeit einer Distanz zwischen den Elektroden veränderlich sind, wobei das Verfahren Messvorgänge zum Messen der Kapazitäten und einen Steuervorgang in Abhängigkeit der gemessenen Kapazitäten umfasst, bei dem eine Spannung an den Elektroden angelegt wird, um das Pendel in einer vorbestimmten Position zu halten, wobei diese Vorgänge durch Anlegen von Impulsen umgesetzt werden, wobei das Verfahren **dadurch gekennzeichnet ist, dass** der Steuervorgang selektiv umfasst:

> - eine sogenannte feine Steuerphase, in der eine erste Spannung zwischen einer der ortsfesten Elektroden und der beweglichen Elektrode angelegt wird, wobei die andere der ortsfesten Elektroden das gleiche Potential wie die bewegliche Elektrode hat,
> - eine sogenannte erweiterte Steuerphase, in der eine zweite Spannung zwischen einer der ortsfesten Elektroden und der beweglichen Elektrode angelegt wird, wobei die andere der ortsfesten Elektroden das gleiche Potential wie die bewegliche Elektrode hat und wobei die zweite Spannung im Absolutwert größer als die erste Spannung ist,

und dass die Steuerphase in Abhängigkeit von einem Schätzwert der Beschleunigung ausgewählt wird, der anhand der gemessenen Kapazitäten ermittelt wird.

## Claims

1. An accelerometer sensor comprising a structure (1) having fastened thereto a pendulum-forming inertial body (2) carrying a movable electrode (3) that is connected to a control unit (5) that is also connected to two stationary electrodes (4.1, 4.2) secured to the structure in order to co-operate with the movable electrode to form two capacitors of capacitances that are variable as a function of distances between the electrodes, the control unit being arranged to perform operations of measuring the capacitances and a control operation as a function of the measured capacitances, in which a voltage is applied to the electrodes in order to maintain the pendulum in a predetermined position, these operations being performed by applying pulses, the sensor being **characterized in that** the control operation comprises selectively:

   > - a "fine" control stage in which a first voltage is applied between one of the stationary electrodes and the movable electrode, while the other stationary electrode is at the same potential as the movable electrode; or
   > - an "extended" control stage in which a second voltage is applied between one of the stationary electrodes and the movable electrode, the other stationary electrode being at the same potential as the movable electrode, and the second voltage being greater in absolute value than the first voltage; and
   > - **in that** the control stage is selected as a function of an estimate of the acceleration as obtained from the measured capacitances.

2. A sensor according to claim 1, wherein, during the fine control stage, a reference potential is applied to said one of the stationary electrodes, and a second potential is applied to said movable electrode and to said other stationary electrode, and in the extended control stage, the reference potential is applied to said one of the stationary electrodes and the reference potential is applied with opposite polarity both to said movable electrode and also to said other one of the stationary electrodes.

3. A sensor according to claim 2, wherein the second potential is zero.

4. A sensor according to any preceding claim, wherein the control unit comprises two digital-to-analog converters that are connected to respective ones of the stationary electrodes.

5. A sensor according to claim 4, wherein each digital-to-analog converter comprises a switch that is controlled by the control unit and that possesses a first input terminal at a reference potential, a second input terminal at a potential that is the inverse of the reference potential, a third input terminal at a zero potential, and an output terminal.

6. A sensor according to claim 5, wherein the output terminal is connected to an impedance matching circuit.

7. A sensor according to claim 1, wherein the movable electrode (3) is connected to an input of an analog-to-digital converter (24) having an output connected to an input of a first estimator (6) connected to the negative input of a subtracter (7) having an output connected to the input of a corrector (8) having a first output connected to a sequencer (9) and a second output connected to a second estimator (10) having a first output forming the main output of the control unit (5) and a second output connected to the positive input of the subtracter (7); the first estimator being arranged to provide a first estimate of a movement of the pendulum from a potential difference between the capacitances, the second estimator being arranged to provide a second estimate of this movement and a control setpoint for compensating an offset due to static symmetry of the capacitances, the corrector being arranged to servo-control the difference between the setpoint and the first estimate on zero, the sequencer being arranged to control the sensor.

8. A sensor according to claim 7, wherein the movable electrode (3) is connected to a first terminal of a switch (20) having a second terminal connected to the output of a digital-to-analog converter (11.2) connected to one of the stationary electrodes (4.2) and to a third terminal connected to the inverting input of a load amplifier (21) with feedback via a capacitor (22) and a switch (23), the load amplifier having its output connected to the analog-to-digital converter (24) connected to the input of the first estimator (6).

9. A method of detecting acceleration by means of an accelerometer sensor comprising a structure (1) having fastened thereto a pendulum-forming inertial body (2) carrying a movable electrode (3) that is connected to a control unit (5) that is also connected to two stationary electrodes (4.1, 4.2) secured to the structure in order to co-operate with the movable electrode to form two capacitors of capacitances that are variable as a function of distances between the electrodes, the method comprising operations of measuring the capacitances and a control operation as a function of the measured capacitances, in which a voltage is applied to the electrodes in order to maintain the pendulum in a predetermined position, these operations being performed by applying pulses, the method being **characterized in that** the control operation comprises selectively:

> - a "fine" control stage in which a first voltage is applied between one of the stationary electrodes and the movable electrode, while the other stationary electrode is at the same potential as the movable electrode; or
> - an "extended" control stage in which a second voltage is applied between one of the stationary electrodes and the movable electrode, the other stationary electrode being at the same potential as the movable electrode, and the second voltage being greater in absolute value than the first voltage; and
> - **in that** the control stage is selected as a function of an estimate of the acceleration as obtained from the measured capacitances.

Fig. 1

Fig. 2

Fig. 3

EP 3 377 910 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2770331 A1

- US 5473946 A